# EUROPEAN PATENT APPLICATION

(11) **EP 4 794 276 A1**
(43) Date of publication of application: **19.08.2026**
(21) Application number: 25157425.7
(22) Date of filing: 12.02.2025
(51) Int. Cl.: H04L 12/66, H04L 69/18, G05B 19/04

(54) **COMMUNICATION TECHNIQUES FOR INDUSTRIAL APPLICATIONS**

(71) Applicant: Siemens Aktiengesellschaft, 80333 München (DE)
(72) Inventor: Kniphoff da Cruz, Arthur, 76187 Karlsruhe (DE); Müller, Tobias, 76351 Linkenheim-Hochstetten (DE)
(74) Representative: Siemens Patent Attorneys

(57) **Abstract**

A gateway (12, 12a, 12b)for communicatively coupling one or more automation devices (11), e.g., one or more IEC 61850 devices, to an industrial controller (13) for controlling the one or more automation devices (11), the gateway comprising: a, preferably computer-implemented, application layer component (30) that implements a communication endpoint (31) of a control application (40) of the industrial controller (13).

## Description

*Independent of the grammatical term usage, individuals with male, female or other gender identities are included within the term.*

### TECHNICAL FIELD

The present disclosure relates to the field of factory and/or process automation. The present disclosure further relates to network equipment, such as a gateway, used in said factory and/or process automation systems. The present disclosure further relates to communication techniques in said factory and/or process automation systems, automation systems in general, in which one or more automation devices are communicatively coupled and controlled by one or more industrial controllers.

### BACKGROUND

In many industrial automation system, such as industrial plants, in addition to the demanding process automation requirements, it is also necessary to integrate automation devices, such as medium-voltage power supply switchgear, into the automation system. Automation devices acting as electrical consumers with high energy requirements are part of such plants. Automation devices known as IEDs (intelligent electronic devices) are used as protection devices for control, switching, measuring, and automation. These are intelligent devices which detect abnormal operating states and faults, and provide an autonomous reaction. This is achieved by comprehensive diagnostics and signaling as well as by safe, fast and selective shutoff of faulty plant components. The monitoring and control of the individual consumers is performed by said mentioned automation devices, and in particular said protection devices, e.g., said IEDs.

For data exchange within the automation system, a gateway may use one or more communication connections, e.g., S7 connections on the one hand for communicating with one or more industrial controllers and the IEC 61850 MMS protocol on the other hand for communication with the IEDs. A gateway may thus support a larger number of automation devices and may in addition offer high availability through redundant design. In particular, a gateway may be used to connect industrial controllers with one or more IEDs, such as protection devices, i.e. switches for medium-voltage automation systems.

A gateway may thus integrate IEDs, e.g., protection devices, into an industrial control system comprising one or more industrial controllers. It is also suitable for redundant configurations, and is therefore preferable where increased availability requirements exist.

Depending on the technical requirements, the process data can be transmitted in both directions between the one or more automation device and the one or more industrial controllers, in particular cyclically or in the event of changes.

In an exemplary embodiment a gateway may act as an IEC 61850 MMS client for IEC 61850 MMS communication with the IEDs. The IEDs form the counterpart, the IEC 61850 MMS servers. All variables provided via IEC 61850 communication can be addressed via the gateway. Depending on the configuration, the timestamp, value and status of the variables are transmitted. The gateway may thus communicate with the industrial controller, such as a SIMATIC PCS 7 automation system via its CP 443-1 communication module or the internal PN Ethernet interface.

### SUMMARY

As a result, the gateway is subject to high data security, integrity, and availability requirements. For the complete integration of the gateway into an automation system, the development of adequate communication interfaces, e.g., based on TCP/IP, is necessary. Such interfaces need sufficient processing power in order to comply with the required speed, complex data structures, required response times in the millisecond range, etc., and also to comply with the requirements of an automation system such as deterministic behavior in the 0.1-1s range, limited CPU power and limited network interface throughput, as well as severely limited data input/output buffer.

Hence, it is an object to meet the above mentioned requirements and to relieve the resources of an industrial controller, to avoid unnecessary protocol conversions and to enable a scalable communication interface in particular allowing for redundancy in the automation system.

According to a first aspect a gateway for communicatively coupling one or more automation devices, e.g., one or more IEC 61850 devices, to an industrial controller for controlling the one or more automation devices is proposed. The gateway comprising a, preferably computer-implemented, application layer component that implements a communication endpoint of a control application of the industrial controller.

According to a second aspect a system for distributed automation data processing is proposed. The system comprising a gateway and an industrial controller, where in the gateway serves for pre-processing the automation data into the application layer format.

According to a third aspect an engineering application for generating and/or configuring a control application of an industrial controller and/or an application layer component of a gateway is proposed.

According to a fourth aspect a method of operating a gateway in an industrial automation system is proposed. The method comprising the steps of implementing by an application layer component a communication endpoint of an application layer data service of a control application of the industrial controller for controlling the one or more automation devices by terminating one or more communications links between the gateway and the one or more automation devices.

According to a fifth aspect a computer program is proposed. The computer program comprising program code that when executed performs the methods steps according to any one of the previous aspects is.

According to a sixth aspect a, preferably non-transitory, storage medium is proposed. The storage medium comprising the computer program according to the previous aspect.

### BRIEF DESCRIPTION OF THE DRAWINGS

Figure 1 shows an illustration of an automation system comprising a plurality of (redundant) automation devices.
Figure 2 shows an abstract representation of an automation system, the architecture of a gateway comprising application layer components in the form of function blocks on the application layer.
Figure 3 shows a network topology of an automation system in a single device setup.
Figure 4 shows a first embodiment of communications stacks of an automation device, a gateway, and an industrial controller in accordance with the ISO/OSI layer model.
Figure 5 shows a second embodiment of the communications stacks of an automation device, a gateway, and an industrial controller in accordance with the ISO/OSI layer model.
Figure 6 illustrates a communication endpoint on the gateway and the application layer component on the gateway.
Figure 7 illustrates the application layer integration concept of an automation system with hardware redundant gateways.
Figure 8 illustrates redundancy and single mode setup of gateway(s) and industrial controller(s), wherein each line represents between the gateway(s) and the industrial controller(s) represents a TCP/IP connection.
Figure 9 shows a sequence diagram of the communication between an automation device, a gateway, an industrial controller and an engineering station.

### DETAILED DESCRIPTION

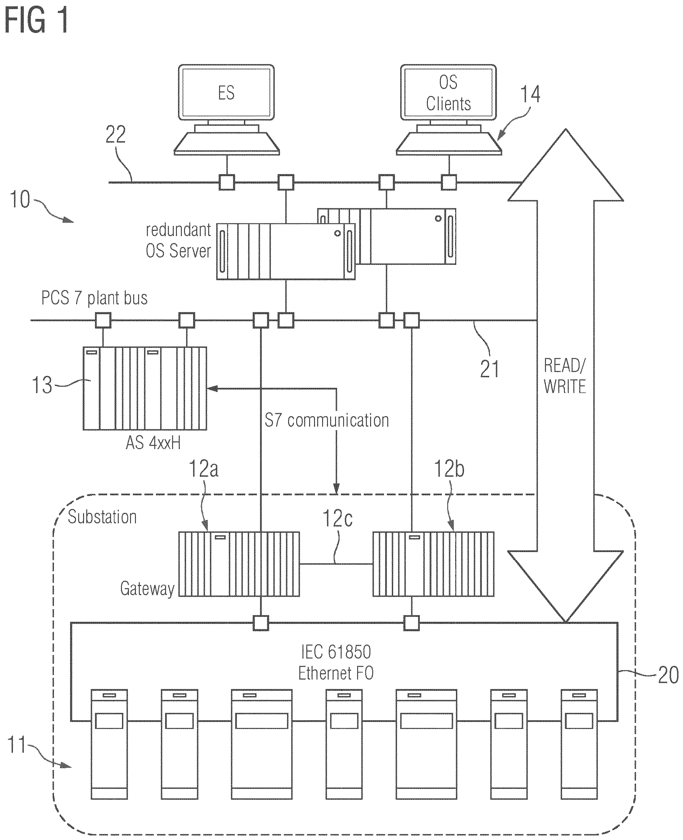

Figure 1 shows an illustration of an automation system 10 comprising a plurality of automation devices 11. The automation system 10 comprises a plurality of communication networks 20, 21, 22 such as a process bus connecting the process-level IEDs and a station bus connecting station-level IEDs, and in particular to one or more industrial controller 13. Alternatively, other bus or network systems may be present or may be used to communicatively couple the automation devices, such as said IEDs. The same applies for the station bus instead of which any network and/or network protocol may be used to communicatively coupling network nodes. Thus, as shown in Figure 1, the automation devices 11 are coupled via a first network 20 using a first communication protocol. This first network 20 is coupled to a second network 21 via one or more gateways 12a, 12b. A gateway 12a, 12b is a piece of networking hardware and/or software used in telecommunications networks that allows data to flow from one discrete network to another. The gateway 12a, 12b may be regarded as a network node and connects two networks 20, 21 with different transmission protocols. Such a gateway 12a, 12b thus serves as the entry and exit points for a network, as all data must pass through or communicate with the gateway 12a, 12b before being forwarded.

The automation system 10 of Figure 1 comprises redundancy in the form of a first and second gateway 12a, 12b connected to the first network 20 and the second network 21. Such a redundant gateway 12a, 12b may be created with two single gateways 12a, 12b. Furthermore, a hardware redundant industrial controller 13 is present in the automation system 10 shown in Figure 1. Furthermore, a redundant operator system 14 for a user to monitor and/or control the automation system 10 is provided.

The automation system 10 may be implemented comprising a PCS 7 plant bus, e.g., using Media Redundancy Protocol, MRP, on one side, and IEC 61850 network using Rapid Spanning Tree Protocol, RSTP, prioritization and a VLAN with Generic Object Oriented Substation Events, GOOSE, multicast on the other side. It is important to ensure fall back functions of all redundant components with the required parameters, i.e. a synchronization between the primary and the redundant version may be required. Synchronization between redundant gateways can be done via a network port or serial connection 12c.

Thus, the gateway 12a, 12b may be located between a network 20 implementing IEC 61850 *Manufacturing Message Specification,* MMS, and the plant bus 21. The gateway 12a, 12b establishes the communication between the industrial controller 13, e.g., an S7 proffered by Siemens, and the IEDs, or in general between the industrial controller(s) 13 and any other automation devices 11. To enable the communication, the IEC 61850 data needs to be converted to data intelligible to the industrial controller. For example, in the case of an industrial controller 13 in the form of an S7, telegrams need to be created on the application layer. Telegrams are used for the (cyclic) data exchange between an industrial controller 13, such as an PLC, and the gateway 12a, 12b. There are different telegrams which contain different (cyclic) parameters and thus they are used for different kind of (control) applications, e.g. for motion control. There are several types of telegrams in general: - standard telegrams (e.g. telegram 1), - proprietary telegrams (e.g. telegram 111), - safety telegrams (e.g. telegram 30, used for safety integrated functions), - free telegrams (used for user specific communication).

Hence, TCP/IP, for example according to RFC1006, may be used as a transport protocol between the industrial controller and the gateway (as well as between the gateway and the automation devices). This allows for a telegram-oriented communication between the industrial controller (i.e. more precisely the control application) and the gateway (i.e. more precisely the application layer component), e.g., on top of the transport layer, e.g., on the application layer. Telegrams can be sent and received from the industrial controller and/or the gateway respectively. The telegrams may be used to specify the data length and/or which type of data that is sent to and from the industrial controller.

Thus, a communication according to the ISO/OSI model can be created. TCP/IP and Ethernet may be used for the actual data transfer on the transport layer and below. Communication via telegrams on the application layer (and the presentation and/or session layer) enables event-driven (control) applications, i.e. the industrial controller 13 can trigger actions on the higher- or lower-level of the automation system 10. Thus, a first protocol can comprise an application layer protocol which implements functions, or data services, for exchanging data between the industrial controller, such as said SIMATIC S7 series or other PLCs, and the one or more gateways. Here, both ISO and/or TCP/IP may be supported as transport protocols.

The industrial controller 13 may comprise one or more data services, e.g., comprised in the control program, such as I_PUT / I_GET, X_PUT / X_GET, X_SEND / X_RCV which are uni-/bidirectional data services that permit to fetch or write data of a communication partner, e.g., a device or a module, such as said gateway 12a, 12b, connected to the industrial controller 13.

Thus, the second protocol, such as said S7 Protocol (RFC 1006), enables the connection of the industrial controller 13 with one or more other communication partners, such as said gateway 13 currently proposed. The second protocol thus provides direct access to the control program 40 or other data services running on the industrial controller 13. For example, the second protocol may allow access to the memory of the industrial controller 13 without changes in the control program itself. The control program 40 is also referred to as control application herein.

For example, the S7 Protocol (RFC 1006) supports a variety of different transportation methods. For the usage of TCP/IP, only a communication unit for Ethernet connection or alternatively an onboard Ethernet interface that supports ISOonTCP (RFC1006) is available.

The gateway 13 may also enable the time synchronization from the plant bus 21 to the automation devices, e.g., said IEDs, on the bay-level. However, the gateway 13 can't be used as a network router or firewall to connect both networks for other forms of communication (like IED configuration or SNMP gateway).

The gateway 13 may be based on industrial computer, e.g., IPC227E as proffered by Siemens, which connects automation devices 11, such as IEC 61850 devices, e.g., from different vendors, to the industrial controller 13, e.g., said S7 controller. The gateway may use two Ethernet RJ45 interfaces, eth0 and eth1: The IEC 61850 interface (eth1) is connected to the Ethernet network with the automation devices 11, e.g. said protection relays, using the protocol IEC 61850 MMS. The interface (eth0) is connected to the industrial controller 13, such as said S7 controller, e.g., via the plant bus 21 using for example Industrial Ethernet. On both ethernet networks the IP protocol may be used with static IP addresses for the communication partners. The gateway 13 may buffer messages (with timestamps) from the IEDs, e.g., said protection relays, and transfers them, for example via the industrial controller 13, to the alarm system of an operator station 14, e.g., said OS server. From the OS server an OS station 14 or OS client may retrieve the alarms, or the messages in general. By way of the operator system, OS, an easy and safe control of the process by the operating personnel is enabled. The operator can observe the process sequence by means of various views and intervene to control the automation system 10 when necessary. The operator system, OS, may be implemented by operator stations 14 for single-user systems or, as shown, for multi-user systems with client/server architecture.

Different types of data may be transferred (cyclically) from the automation devices 11, such as said IEDs, e.g., said protection relays, to the outputs of special function block(s) of an industrial controller 13, e.g., a special function block in the form of a data service 41 or the control program 40 itself. The control program 40, also referred to as control application, may thus comprise one or more functions blocks. The data types may include BOOLEAN, BYTE, REAL, INTEGER, DOUBLE INTEGER, or the like. A data type may also include date and/or time of a data object of the one or more automation devices, such as said IEDs. As mentioned, IEC 61850 is an object-oriented standard. Each physical device may comprise one or more logical devices (LD), logical nodes (LN), data objects (DO) and data attributes (DA). A logical node comprises mandatory and/or optional data objects. A data object may have predefined data attributes.

Up till now, a data type or data format conversion has been performed by the industrial controller, e.g., using the control application 40 or a data service 41, e.g., in the form of a function block, on the industrial controller. It is now proposed to perform a data format adaption, e.g., from the IEC 61850 MMS into the format of the control application 40 of the industrial controller 13 on the gateway 12. It should be understood, that the data format is a data format defined on the application layer and/or shared between the application layer component 31 on the gateway 12 and the control program 40 (or the data service) on the industrial controller 13.

A scan cycle time of the industrial controller 13 is one second or greater. Binary commands and interlocks are transferred from inputs of special function blocks in the industrial controller. In combination with the reporting mechanism for IEC 61850, one or more telegram (tags) representing different data types can be exchanged, e.g., event based, between the one or m ore automation devices, such as said IEDs, and the control application on the one or more industrial controllers 13 via the gateway 12 to reduce unnecessary load on the fieldbus, e.g., on the bay-level 20 and/or station-level 21.

The gateway 12a, 12b may be based on a standard industrial PC, e.g., a Siemens IPC227E. The operating system is an embedded Linux system. The gateway may comprise a web interface for diagnostic information. The gateway 12a, 12b can be used in single or redundant operation. The coordination with an optional redundancy partner is done via an Ethernet port or a serial interface 12c, e.g., depending on the parametrization in the web interface. The gateway may thus support the communication protocol IEC 61850 MMS Edition 1 and Edition 2.1. Both the overlayed systems (like PCS 7 PLC and WinCC) and the underlaid systems (like IEDs) may implement protections and interlocks to avoid damage of property or personal damage. The gateway 12a, 12b may thus supports the Edition 1, Edition 2.0 and/or 2.1 of the communication protocol IEC 61850 MMS.

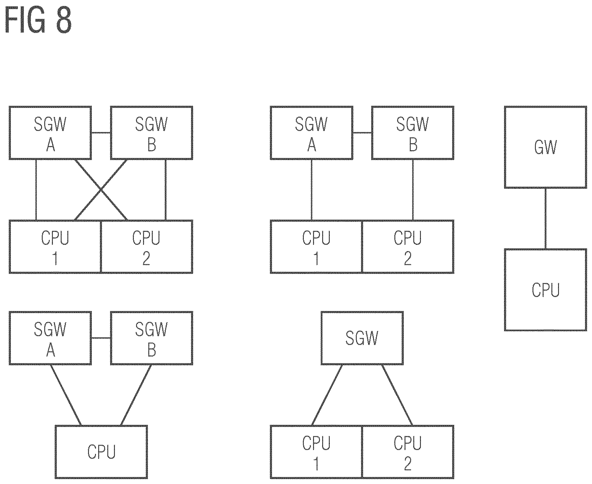

The industrial controller 13 and the gateway 12a, 12b are participants of a common Ethernet network, and may have static IP addresses. In the gateway 12a, 12b, only the IP address must be defined for the communication with the industrial controller 13, e.g., the CPU of said industrial controller 13, e.g. said S7 industrial controller. All other communication parameters for an second communication connection or communication link, such as the S7 communication shown in Figure 1, are engineered in an engineering application ES, such as a PCS 7 engineering station, and therein mainly in the PCS 7 software tool NetPro. The PCS7 engineering station ES may establish a connection to the gateway. The one or more, e.g., each, CPU of the industrial controller 13 may then be connected to the one or more, e.g., each, gateway 12a, 12b via a communication connection, e.g., an S7 connection. A redundant system as shown in Figure 1 with two industrial controllers 13 and two gateways 12a, 12b would therefore need to have four communication connections defined, as e.g. shown in Figure 8.

In any case, multiple connections from multiple gateways 12a, 12b to one automation device 11, such as said IED, are also possible, for example if the IED supports the required number of connections.

Thus, the gateway 12a, 12b may have two ethernet interfaces designated for the second network implementing a second protocol, e.g., an S7 protocol, and the first network implementing a first protocol, such as the IEC61850 MMS protocol. These must be configured according to the existing networks so that communication with the industrial controller is possible via interface X1 and the connection to the IEDs via interface X2. The interface X1 (implementing e.g. the second protocol) and X2 (implementing e.g. the first protocol) must be in different logical networks (different subnets). For example, if X1 is configured for network 140.80.0.0 (X1 default configuration), the interface X2 must not be inside the same subnet.

Function blocks, e.g. PCS7 function blocks, in CFC refer to these connections via a connection ID, which may be given as a hex value. CFC (Continuous Function Chart) is an editor with a graphical user interface, an extension based on the STEP 7 software package. It is used to create the entire software structure of the CPU (of the industrial controller) and may use preconfigured function blocks. The editor enables creation and insertion of such function blocks into function charts, assign block parameters and interconnect blocks. Interconnecting means that values can be transferred from one output to one or more inputs during communication between the function blocks or other objects.

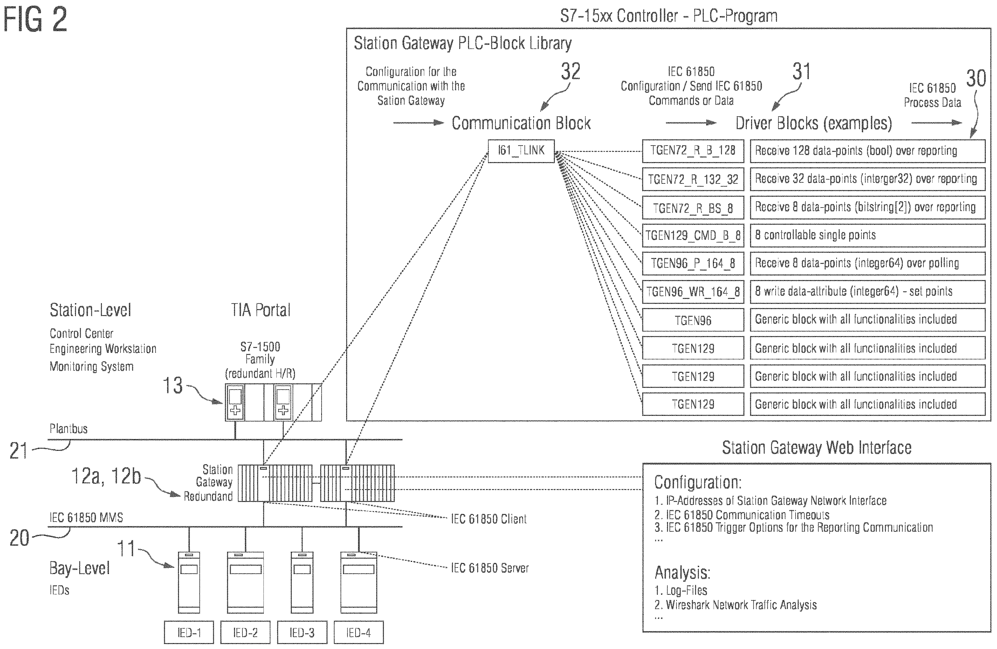

The CFC or another (suitable) engineering application may be used to configure the gateway 12a, 12b as well. To that end, a communication block may be created and/or configured to enable communication between the gateway 12a, 12b and the industrial controller 13. Such a communication block is shown in Figure 2 and is used to receive and/or send message such as application layer telegrams between the industrial controller 13 and the gateway 12a, 12b. The communication block 32 may be understood as a specific function block. Thus, such an application layer communication block may be loaded and/or executed on the gateway 13. The communication block 32 may thus comprise a communication stack for enabling physical, data link, network, transport and/or transport communication. The communication block may in particular enable processing of telegrams on the application layer. For example, the communication block 32 may process a header of an application layer telegram. Said application layer telegram may comprise a header and other sections such as payload. Based on the process data received from the automation devices the communication block 32 may put together an application layer telegram, and in particular assign a header to said telegram, or vice versa in case a telegram is to be mapped on the first protocol on the first network 20 and the payload to be transmitted to the one or more automation devices.

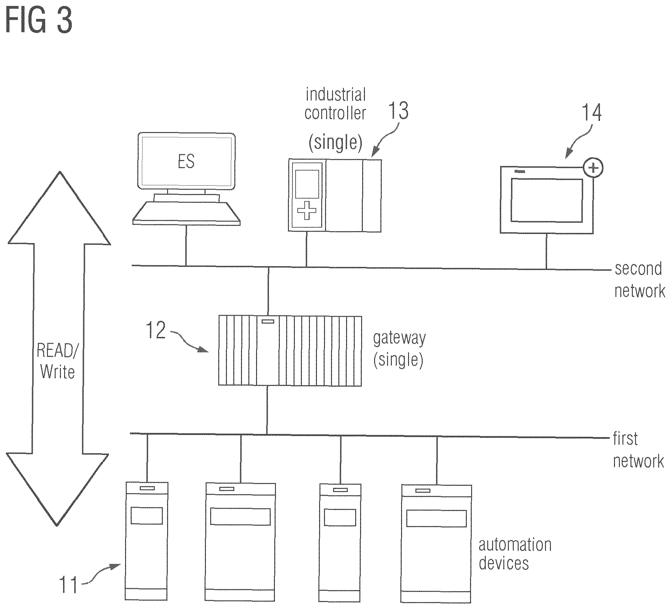

Thus, e.g., by way of said function block 32, an application layer connection between the industrial controller 13 and the gateway 12a, 12b may be established. Hence, the communication block 32 may implement a communication endpoint of the control application (i.e. extending the control application by way of the application layer component onto the gateway). The communication block 32 may be understood as (part of) an application layer component 30 on the gateway 13, i.e. stored on and/or executed by the gateway. A function block of the actual control application may thus be located on the industrial controller. The industrial controller may execute this function block as part of the control application, e.g., for controlling the automation system and/or the one or more processes in the plant. The communication block (of the control application) may be located on the gateway and communicatively couple the function block(s) on the industrial controller to the (communication block on the) gateway. The communication block may be coupled to one or more driver blocks which serve for communicating with the automation devices. As shown in Figure 3, one or more driver blocks 31 may serve for communicating with each automation device on the first network, e.g., on the bay-level. It should be understood that, the driver blocks 31 may also be part of the application layer component 30 of the gateway 13 and may thus also implement (part of) the communication endpoint of the control application (on the application layer), i.e. said control application of the industrial controller. Hence, the industrial controller 13 and the second network 21, e.g. said plant bus, is effectively offloaded by the preprocessing of data received via the first network 20 (and the one or more automation devices).

In Figure 8 several redundancy configurations are shown. One or more instances of the application layer component 30, e.g. comprising said communication block 32 and/or driver blocks 31, may be executed and/or run in single and in redundant systems according to the redundancy functions of the automation system 10 comprising said one or more industrial controller and/or the one or more gateways. In Figure 8 the first and second gateway SGW A, SGW B comprise a (single) instance of the application layer component, preferably comprising the communication block (and the one or more drivers). However, as the case may be, each gateway may comprise one or more instances of the application layer component 30, e.g. comprising said communication block 32 and/or driver blocks 31.

The communication or function block I61_LINK, as shown e.g. in Figure 2, manages the redundant communication with up to four connections (with the one or more industrial controller). Each connection is engineered as a single connection. All connections combined constitute a redundant connection. A redundant gateway pair 12a, 12b needs at least two connections to one communication block I61_LINK. Each connection may be monitored using hearth beat telegrams from both gateways. One connection is sufficient for the complete data transfer in both directions. If two connections are available, one connection (e.g., via one CP443-1 card) is dedicated to sending data only and the other connection (e.g., via another CP443-1 card) to receiving data only. The data transfer may be switched over to another connection of the same gateway after a data package is not acknowledged by the receiver.

Returning to Figure 2, the function block I61_LINK is the interface to the gateway 12a, 12b for the specific function blocks on the industrial controller 13. The function block I61_LINK coordinates and executes the data exchange between the function blocks on the industrial controller and the gateway. The inputs may contain the ID of the used connections. The driver blocks 31 are connected to a gateway by binding their input element to the output element of the function block I61_LINK. In the configuration program CFC, the connection may be graphically established. The function block I61_LINK accepts up to a predetermined amount of connected driver function blocks. If more than said predetermined amount of automation devices are to be connected, a second function block I61_LINK block may be used. The connected function blocks may run in a slower cycle than the function block I61_LINK block. Each specific (IEC 61850) driver function block may need a registration in the connected function block I61_LINK.

Figure 3 shows a network topology comprising a (single) industrial controller 13, such as a S7-1500 proffered by SIEMENS. The gateway 12 connects automation devices, such as said IEC 61850 devices, for example from different vendors, to an industrial controller 13 and/or an engineering application on an engineering station ES such as the TIA Portal system. As mentioned before, the gateway 12 design may be based on a standard industrial PC, such as Siemens IPC227E. The operation system of the gateway 12 may be an embedded Linux system. The gateway may use two Ethernet RJ45 interfaces: The IEC 61850 interface (eth1) is connected to the Ethernet network with the protection relays using the protocol IEC 61850 MMS. The interface (eth0) may be connected to the engineering station's, e.g., the TIA Portal, CPUs via the open IE (Industrial Ethernet) interface. On both ethernet networks the IP protocol is used with static IP addresses for the communication partners. The gateway13 operates as an IEC 61850 client, while the protection relays function as IEC 61850 servers. In order to ensure network security, direct communication between both networks over the Station Gateway is not possible.

The gateway is configured and/or operative for the communication of automation devices 11, such as IEDs, to project specific control application software in one or more industrial controllers 13, such as S7-400 or S7-400H proffered by SIEMENS. For this purpose, a library with (IED-) driver blocks may be comprised in the gateway, cf. again Figure 2. The function blocks for the communication with the gateway 12 are using the system function blocks, e.g., BSEND and BRCV, (in the CPU) of the industrial controller 13. These function blocks may be comprised in the industrial controller, e.g., S7-400, and/or in its CPU module, respectively.

The gateway 12 may provide a web interface on the network interface (eth0), e.g., on port 8080 (enter 'http://xx.xx.xx.xx:8080') connecting it to second network (in which the industrial controller and/or the engineering station is located in). The gateway 12 can be accessed from an engineering station or another service PC with an internet browser.

The gateway 12 may comprise or even consist of an Industrial PC, such as IPC227E. The operation system may be an embedded Linux system where the gateway's APIs run. The gateway 12 provides a web interface for diagnostic information and configuration. The gateway 12 may contain a function block library, as e.g. described in connection with Figure 2. This library is used on the industrial controller to establish the connection with the gateway, to configure the IEC 61850 communication, to receive the, e.g., IEC 61850, process data (from the automation devices) and to send (IEC 61850) commands and data (to the automation devices).

As discussed herein different setup options, such as redundancy, are possible. The gateway 12 may comprise a (software) client, e.g., an IEC 61850 client, for receiving data via the first network 20 from one or more (IEC 61850) servers, e.g., using buffered reporting (e.g., buffered report control block BRCB) and unbuffered reporting (e.g., unbuffered report control block URCB). Static and dynamic datasets may be supported as well. The IEC 61850 data-types Bool, BitString, Float, Integer, Integer32 and Integer64 may also be supported. The values of the data-attributes are transmitted with quality-code and timestamp.

It is also possible to write data to attributes of the IEC 61850 servers from the (control program of the) industrial controller 13. This functionality may support the following data-types: Bool, BitString, Float, Integer, Integer32 and Integer64. The industrial controller and/or its CPU may support the standard system function blocks from the TCON family, which use the open Industrial Ethernet, IE, interface from the industrial controller to establish a connection with the gateway. Normally, both redundant (H/R) and single industrial controllers support open IE communication.

The block library contains a communication block and different driver blocks, as the ones shown in Figure 2. The communication block 32 is used to establish communication with the gateway(s), where the entire configuration of the communication between the industrial controller 13 and the gateway(s) 12 is done (no extra configuration on the industrial controller hardware in TIA Portal is required for the gateway). The different driver blocks 31 are connected to the communication block 32. The driver blocks 31 may be used to configure the IEC 61850 data points to be read (via reporting or polling) and to specify commands and attributes to be sent/written. The (IEC 61850) process data from the automation devices 11 is received by the driver blocks 31. The commands and data are sent from the driver blocks 31 to the automation devices 11. The specification of the IEC 61850 data or command points is done based on the IEC 61850 Standard MMS syntax.

On the first network, e.g., said IEC 61850 network, the gateway 12 operates as an IEC 61850 client and the IEDs (Intelligent Electronic Devices) as IEC 61850 servers. The communication protocol Manufacturing Message Specification (MMS) is also supported by the gateway. The gateway's (IEC 61850) client (same API) can communicate with (IEC 61850) servers, which e.g., communicate over IEC 61850 Ed. 1.0, Ed. 2.0 and Ed. 2.1.

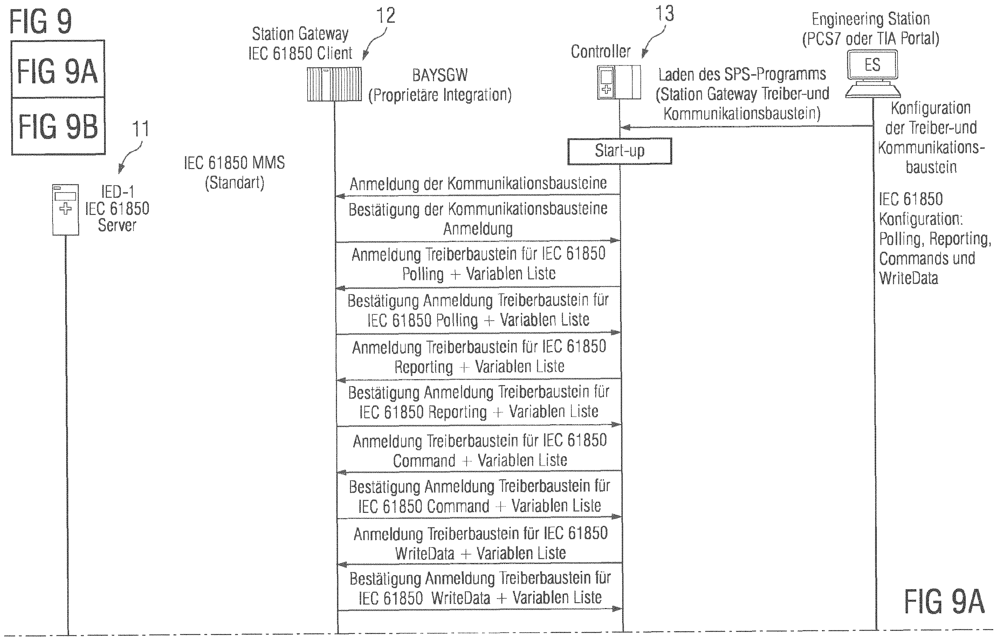

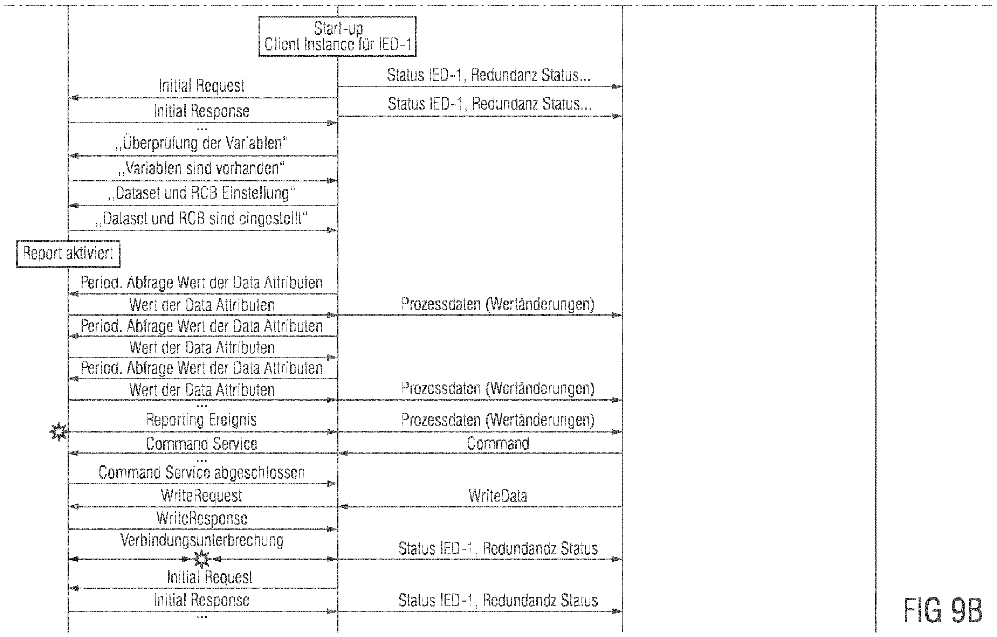

The communication with the gateway 12 from the industrial controller's side, i.e., the second network, is handled via the communication block I61_TLINK. However, the IEC 61850 configuration (configuring the gateway 12 as a client on the first network) is done using the driver blocks. The driver blocks are connected to an instance of the communication block I61_TLINK. After the controller startup procedure, the driver blocks' configuration (i.e. the gateway's client configuration) is transferred to the gateway 12, as shown in Figure 9. Based on this configuration, the one or more (IEC 61850) client instances are started on the gateway 12. After this process, the (IEC 61850) process data received by the gateway's client is sent directly to the respective driver block instances. Commands and data can be sent to the respective server on the one or more automation devices, e.g., said IED (IEC 61850 server) using the driver blocks.

The gateway 12 is located between the first network, e.g., operating according to the IEC 61850 protocol, and the second network, e.g., operating according to a control system network. The gateway establishes the communication between the industrial controller 13 and the automation devices 11, e.g., said IEDs. To enable the communication, the IEC 61850 data is converted to special telegrams, i.e. the data format of and/or suitable for processing by the control application, by the gateway's communication block and vice versa. The gateway cannot be used as a network router or firewall to connect both networks for other forms of communication (like IED configuration or SNMP gateway).

As mentioned, the gateway's block library contains a communication block 32 and different driver blocks 31. The communication block 32 is used to establish communication with the gateway(s), where the entire configuration of the communication between the industrial controller 13 and the gateway(s) 12 is done (no extra configuration on the controller hardware, e.g., in the TIA Portal may be required for the gateway). The different driver blocks 31 are connected to the communication block 32. The driver blocks 31 are used to configure the IEC 61850 data points to be read (via reporting or polling) and to specify commands and attributes to be sent/written. The IEC 61850 process data is received by the driver blocks. The commands and data are sent from the driver blocks. The specification of the IEC 61850 data or command points is done based on the IEC 61850 Standard MMS syntax.

The driver blocks 31 may be divided into a plurality of, e.g., five, groups based on the functionality: 1. "Commands": Send the different command types SPS, DPC, INC, ENC, BSC, ISC, APC and BAC; 2. "Polling": Read data periodically; 3. "Reporting": Read data over "events" (using static or dynamic datasets - respectively using BRCBs or URCBs); 4. "WriteDataAttributes": Write data in data-attributes from the IEC 61850 server; 5. "Generic": Generic block containing all the command, polling, reporting and write-data functionalities.

The driver block-instances need to be connected to a I61_TLINK-instance, i.e. a communication block instance, as specified in Figure 2. Multiple gateway setups can be used with the same industrial controller 13. In this case the maximal number of application layer components 30, e.g., comprising said one or more communication blocks 32 and/or driver blocks31, can variate depending on the industrial controller's capacity.

The communication block 32 is used to establish communication with the gateway(s), where the entire configuration of the communication between the industrial controller and the gateway(s) is done (no extra configuration on the controller hardware in TIA Portal may be required for the gateway). Multiple instances of this block can be used in parallel respecting the characteristics of the maximal capacity. Thus, the function blocks, as described herein, are running in single and in redundant configuration according to the redundancy functions of the industrial controller 13.

In redundant mode, two gateways 12a, 12b are working as two (IEC 61850) clients with individual connections. To setup a redundant gateway 12a, 12b, two singular IPC227E Station Gateways can be paired to one redundant Station Gateway. The function block for an automation device, such as an IEC 61850 device, in the engineering tool, such as a PCS 7 station, may be used to configure the operation of the redundant gateways 12a, 12b. Additionally, some information may be exchanged between the redundant partners via a redundancy connection. This redundancy connection may be implemented via a serial COM1 or other network port, e.g., 12c as shown in in Figure 1.

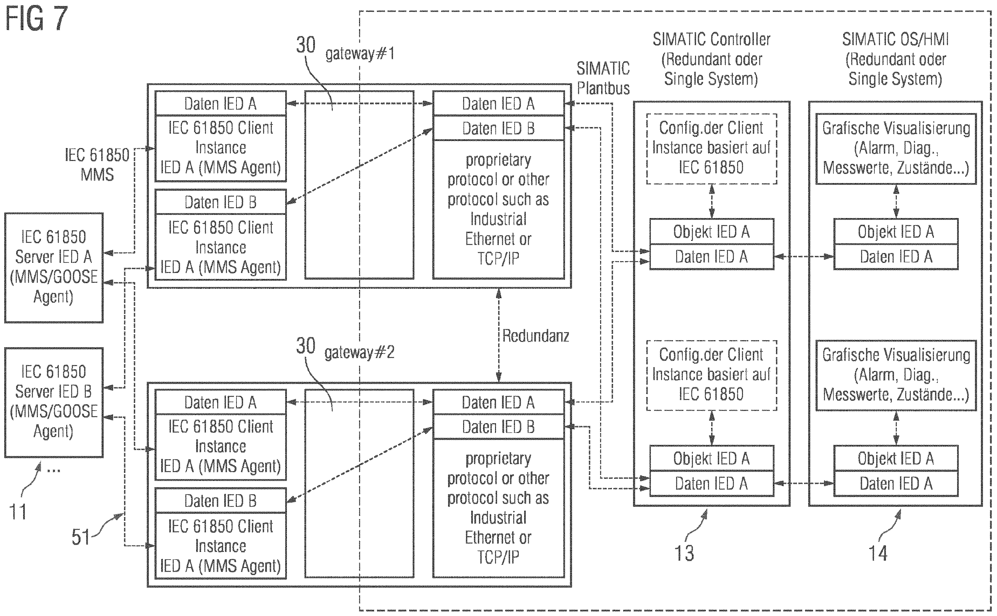

Each gateway 12a, 12b of a redundant pair is an independent client of an (IEC 61850) automation device 11. Both gateways 12a, 12b are receiving data from each automation device, e.g., IEC 61850 device, at the same time. But only one gateway transfers the data to the industrial controller 13 and its CPU, respectively, and only one gateway writes commands into the appointed automation device 11, e.g., said IEC 61850 device. The data transfer to the industrial controller 13 and its CPU, respectively, and to the automation device 11, such as the IEC 61850 device, is not necessarily concentrated in one gateway 12a, 12b for all automation devices 11, such as said IEC 61850 devices, as e.g. shown in Figure 7. Each gateway 12a, 12b may transfer the data of a first group of automation devices, e.g., said IEC 61850 devices, whereas another gateway transfers the data of a second group of automation devices. The role of a gateway for an automation device, e.g., said IEC 61850 device, may be managed in the industrial controller and by its CPU, respectively, by the function block for this automation device, i.e. said IEC 61850 device.

The function block I61_TLINK (on the application layer, i.e. the application layer component) manages the redundant communication with up to four TCP/IP connections. Each TCP connection is engineered as a single connection. All connections combined constitute a redundant connection. A redundant gateway pair 12a, 12b needs at least two TCP connections to one function block I61_TLINK. The different supported operation modes in combination with the different industrial controllers are represented in Figure 8. In the picture each line between the gateway(s) and the controller(s) represents a TCP/IP connection.

An address of an IEC 61850 MMS data-point is constructed from several parts: the IED Name (e.g. IED_0081), Logical Device (LN, e.g. PROT), Logical Node (LN, e.g. PTOC6), Functional Constraint (FC, e.g. ST) and so on. Normally, this IED name is identical for all data-points of a device. Therefore, the IED name can be omitted when addressing the data-points. The gateway then adds the name automatically.

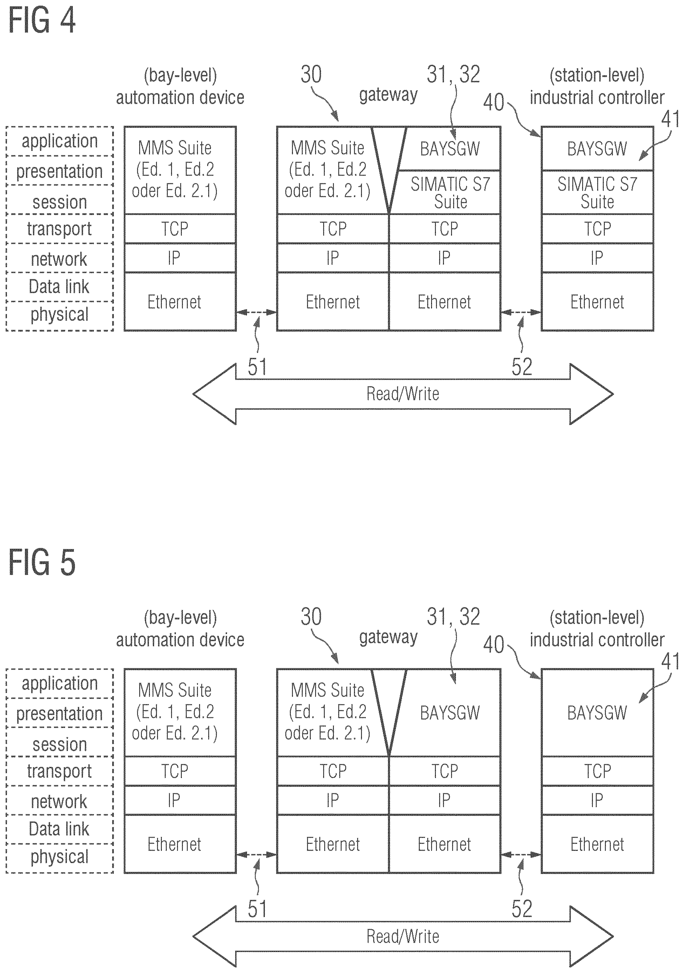

Turning to Figure 4 an overview of the communication stacks of an automation device, a gateway and an industrial controller is provided. The layer model according to Open Systems Interconnection (OSI) model is a reference model from the International Organization for Standardization (ISO) which is provided in Figure 4 as a reference. For the lower layers including the transport, network, data link and physical layer TCP, IP and Ethernet may be used in the communication stack of the one or more automation devices 11 in the first network, e.g., on the so-called bay-level, the gateway 12, and the industrial controller 13 on the second network, e.g. on the so-called station-level. Now, the one or more automation devices may make use of IEC 61850 MMS which is a client/server-based protocol for communications between IEDs on the session, presentation and the application layer. This MMS Suite provides a range of functions that allows the client on the gateway to obtain the data model of the server on the automation device, read or modify individual values, delete entries as well as transfer files. The IEC 61850 (IEC 61850 - Communication Networks and Systems in Substations) standard defines the MMS protocol (Manufacturing Message Specification) as a server/client type communication. This protocol is typically used for information exchange between IEDs (IED - Intelligent Electronic Device) and higher-level devices (such as an industrial controller or a SCADA system) over the Ethernet. The MMS protocol is mapped on TCP/IP and enables the access to a server based on its IP address where the client on the gateway can read/write data, read configuration and exchange files on the automation device. IEC 61850 is an object-oriented standard. Each automation device is described as logical device(s) (LD), logical node(s) (LN), data objects (DO) and data attributes (DA).

The gateway 12 may comprise two communications stacks, wherein the first stack serves for communicating over the first network with the automation device, and the second communication stack serves for communicating over the second network, e.g., with the industrial controller or an engineering application, e.g., on an engineering station. On the bay-level side the process data, or data in general, is received by the gateway and processed according to the of IEC 61850 MMS (Manufacturing Message Specification) by a client instance on the session, presentation, and application layer. Then the data in accordance with the MMS protocol is mapped on the application layer, e.g., by an application layer component 30, preferably in accordance with an application layer protocol, e.g., of said the control application, to the format of the control application. Hence, the gateway may implement a communication endpoint for the communication of the automation device with the industrial controller.

The data in the format of the control application may then be forwarded in accordance with an application layer protocol (as well as the presentation layer protocol and the session layer protocol -as the case may be) of the control application to the control application 40 or a data service 41 on the industrial controller. To that end, the data in the format of the control application 40 is encapsulated again according to the lower layers' protocols and transmitted to the industrial controller.

The industrial controller thus receives the process data from the automation device and processes it according to its protocol stack comprising a transport, network and physical layer protocols, and in accordance with the session-, presentation and/or application layer protocol of the control application. Thus, the control application is extended by way of the application layer component onto the gateway.

The protocol layer corresponding to the session, presentation, and application layer protocols of the gateway and of the industrial controller are referred to as BAYSGW in Figures 4 and 5. Hence, the gateway comprises a (pre-)processing (of the process data of the automation devices) on the application layer, e.g., in accordance with the application layer protocol of the control application. The gateway thus comprises, e.g., from the point of view of the automation device, a communication endpoint 33 in the form of an application layer component. This application layer component performs data processing in accordance with the control program of the industrial controller. The application layer component on the gateway and the control application (or data service) on the industrial controller are referred to as BAYSGW, respectively, in Figures 4 and 5. It should be understood that as described herein, BAYSGW may comprise said one or more function blocks, in particular the communication blocks as described herein, in particular as shown and described in connection with Figure 2, and the industrial controller may comprise one or more function blocks, in particular as described in connection with Figure 2, for controlling the automation system, the automation system 10 preferably comprising the automation device(s)a and/or the process to be controlled. Thereby, a modular processing of the data is achieved, wherein a first processing, i.e. pre-processing is performed on the data received from the automation devices at the application layer of the gateway and a second processing, i.e. further processing is performed on the application layer of the industrial controller comprising the control application.

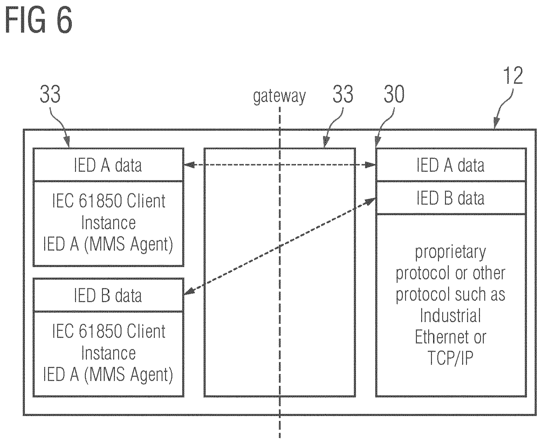

In Figure 6 the communication endpoint 33 on the application layer of the gateway is visualized. The gateway 12 thus comprises a one or more application layer components 30 implementing a communication endpoint 33 of a first communication link between the one or more automation devices and the gateway. This communication endpoint 33 terminates the connection (on the application layer) between the automation devices and the control application on the industrial controller. The gateway 12 may comprise a first client instance for data transmission to and/or reception from an automation device, i.e. data may be received from IED A, and a second client instance for transmission and/or reception from a second automation device, i.e. IED B. The communication endpoint 33 may be part of an application layer component 30 that maps the data from IED a and IED B onto a format corresponding to the format of or suitable for the control application. To that end, the application layer component 30 may also invoke presentation layer and/or session layer protocols or protocol elements, for example corresponding header of telegrams for data transmission within said layers. Protocol layers below the application layer (and/or the presentation and/or session layer) however may remain unaffected and may be for example include industrial ethernet, TCP/IP or a proprietary protocol on the transport, network, data link and physical layer.

Turning to Figure 7, a redundant setup of an automation system 10 is illustrated. Similar to the gateway shown in Figure 6, two automation devices 11 exemplarily incorporated as IED devices comprising respective server instances functioning in accordance with IEC 61850 MMS/GOOSE standard are shown. Two redundant gateways #1, #2 are connected to the automation devices 11, wherein each gateway #1, #2 is setup as described herein in connection with Figure 6, i.e. with individual communication links (over a first network) to the automation devices 11, illustrated by the dotted lines in Figure 7. The redundant gateways terminate the communication between the automation devices 11 and the control application on the industrial controller 13. Similarly, the gateways #1, #2 terminate the communication between the automation devices 11 and the alarm management and/or event handling and visualization application on an operator station 14, such as an HMI or any other operator interface.

As described herein, the gateways #1, #2 pre-process the process data from the automation devices 11 and not only convert the protocols from the first network to the second network on the lower layers, but in addition an application layer processing and format adaptation is performed in order to match the (process) data to the format of the control application and to make it suitable for processing by the control application. Thus, the gateway(s) #1, #2 acts as a terminal which ends the communication link 51 of the automation devices. A communication endpoint may be understood as a type of communication network node. The communication endpoint may be understood as an interface exposed by the control application of the industrial controller, wherein it is proposed herein to locate this interface, i.e. the communication endpoint on the gateway. The application layer component, for example implemented in software, e.g. program code, serves as a communication endpoint that is used by the underlaying transport layer protocol, such as User Diagram Protocol (UDP) and Transmission Control Protocol (TCP). A communication endpoint may thus be understood as an entity on one end of a transport layer connection. A communication endpoint may thus be understood as a set of communication resources that allows the control program to interface with the network hardware to transmit and/or receive data over the (first) network and thus communicate with the automation devices. The communication endpoint may thus serve for sending or receiving data between the automation devices (and their respective (embedded) control software) and the control application. The communication endpoint thus (logically) links the control application to first network (and thus the automation devices on that network). A communication endpoint is typically defined by a socket (IP address + port). The automation device may thus establish a logical connection with the control application via the communication endpoint on the gateway. This logical connection allows the one or more automation devices to exchange data with the control program. The communication endpoint defines that this exchange happens on the gateway and is implemented by the application layer component on the gateway.

As described herein, there may also be a redundancy connection provided between the gateways. Furthermore, the gateways and the respective application layer components may be connected with a plurality of application layer application (instances), e.g. function blocks and/or control programs in general, on the one or more industrial controllers and/or engineering stations and/or operator stations in accordance with the type of redundancy implemented in the automation system. As shown in Figure 7 each application layer component and respective instance is connected to a (part of a) control program or other application on the application layer that further processes the processes at from the automation devices. Here, the gateway #1 is connected to a data object in the industrial controller for processing the data of IED A. The gateway #2 is connected to the same industrial controller and the same data object for processing the data of IED A. The same applies for the data of IED B which is transmitted over the second network, in this case a SIMATIC plantbus, to the industrial controller and an application for processing the process data of IED B. Hence, the gateway, by way of the application layer component, maps the process data of the automation devices onto the data model or control model of the industrial controller and the control application respectively. The gateway application layer component recognizes which control model the object is using and performs the command operation as required. The same control model may also be used by the engineering station and /or operator station.

Hence a gateway is proposed, wherein the application layer component is operative to delay transmission of the received automation data in the application layer format to the control application via the second transport protocol, e.g., delaying and waiting for acknowledge of reception and/or processing of previous data by the control application. The application layer component of the gateway may be operative to monitor and/or analyze the reception of the automation data in the first data format in the first transport layer protocol. The application layer component may be operative to store the (pre-processed) automation data, e.g., in case the control application is unavailable, for example due to an interruption of a network communication between the gateway and the industrial controller. The application layer component may be operative to duplicate and/or repeatedly transmit the data received from the one or more automation devices to one or more control applications on one or more industrial controllers, preferably for redundantly transmitting the pre-processed data to a plurality industrial controller.

## Claims

1. A gateway (12, 12a, 12b) for communicatively coupling one or more automation devices (11), e.g., one or more IEC 61850 devices, to an industrial controller (13) for controlling the one or more automation devices (11), the gateway comprising:
a, preferably computer-implemented, application layer component (30) that implements a communication endpoint (31) of a control application (40) of the industrial controller (13).

2. The gateway according to the preceding claim,
the communication endpoint (31) terminating a communication connection of an application layer data service (41) of the control application (40).

3. The gateway according to any one of the preceding claims,
wherein the gateway (12) serves for transmitting pre-processed data in an application layer format to the control application (40) on the industrial controller (13), and/or vice versa.

4. The gateway according to any one of the preceding claims,
wherein the communication endpoint (31) comprises a communication interface that enables a first communication link (51) between the one or more automation devices (11) and the gateway (12), and
wherein the communication endpoint (31) enables a logical connection between the automation devices (11) and the control application (40) on the industrial controller (13).

5. The gateway according to any one of the preceding claims,
wherein the application layer component (31) serves for (pre-)processing data received in a first data format from the one or more automation devices (11) via the first communication link (51) using a first transport-layer protocol, and
for transmitting the data to the control application (40) on the industrial controller (13) in a second data format via a second communication link (52) using a second transport-layer protocol between the gateway (12) and the control application (40) on the industrial controller.

6. The gateway according to any one of the preceding claims,
wherein the application-layer component (30) serves for receiving data over the first communication link (51) and for converting the data from the first data format into an application-layer format compatible with a control application (40) of the industrial controller (13), i.e. such that the data can be processed by the control application (40).

7. The gateway according to any one of the preceding claims,
the application layer component (30) operative to transmit the data in the application layer format via a second transport layer protocol to the control application (40) on the industrial controller (13).

8. The gateway according to any one of the preceding claims,
the application layer component on the gateway comprising an, e.g., IEC 61850, server operative to transmit the data in the application layer format to an, e.g., IEC 61850, client of the control application on the industrial controller.

9. The gateway according to any one of the preceding claims,
the application layer component (30) on the gateway comprising an, e.g., IEC 61850, client operative to receive the data in the first data format from an, e.g., IEC 61850, server on the one or more automation devices (11).

10. The gateway according to any one of the preceding claims,
wherein the client on the gateway (11) is, preferably an IEC 61850 client and, capable of loading one or more driver components (31) for communicating over the first communication link (51) with the one or more automation devices (11).

11. The gateway according to any one of the preceding claims,
wherein the application layer component (30) serves for pre-processing the data from the automation devices (11) into the application layer format.

12. The gateway according to any one of the preceding claims,
wherein the application layer component (30) serves for mapping the data received from the one or more automation devices (11) onto one or more data objects of the application layer format, as, e.g., used and/or defined by the control application data model, e.g. a quality code byte input variable, for example Boolean valued, from the one or more automation devices (11) is mapped into byte variable of an application layer format , such as integer values, in particular wherein the data is automation data in an IEC 61850 MMS and/or GOOSE data format, i.e. in accordance with IEC 61850.

13. The gateway according to any one of the preceding claims,
the application layer component (30) and the control application (40) use the same application layer format, i.e. a shared data format between the application layer component (30) and the control application (40), e.g., having a common semantic and/or syntax, and/or
the automation data obtained from the one or more automation device (11) and not necessary for the control of the automating devices (11) by the control application (40) are discarded by the application layer component (30).

14. A system for distributed automation data processing comprising a gateway (12, 12a, 12b) and an industrial controller (13), where in the gateway (12, 12a, 12b) comprises an application layer component (30) that implements a communication endpoint (31) of a control application (40) of the industrial controller (13), preferably wherein the application layer component on the gateway serves for pre-processing the automation data into an application layer format suitable to be processed by the control application on the industrial controller.

15. An engineering application (ES, OS) for generating and/or configuring a control application (40) of an industrial controller (13) and/or an application layer component (30) of a gateway (12, 12a, 12b).

16. A method of operating a gateway (13) in an industrial automation system (10), comprising the steps of implementing by an application layer component (30) a communication endpoint (31) of a control application (40) or an application layer data service (41) of the industrial controller (13) for controlling the one or more automation devices (11) by terminating one or more communications links (51) between the gateway (12) and the one or more automation devices (11).

17. A computer program comprising program code that when executed performs the methods steps of the preceding claim.

18. A, preferably non-transitory, storage medium comprising the computer program according to the preceding claim.
